# EUROPÄISCHE PATENTSCHRIFT

(11) **EP 0 562 543 B1**
(45) Veröffentlichungstag und Bekanntmachung des Hinweises auf die Patenterteilung: **19.06.1996**
(21) Anmeldenummer: 93104745.0
(22) Anmeldetag: 23.03.1993
(51) Int. Cl.: B65G 35/06, B65G 21/20

(54) **Förderer zum Transportieren von Werkstückträgern**
Transporting device for workpiece-carriers
Dispositif de transport pour porte-pièces

(30) Priorität: 25.03.1992 DE 4209703
(43) Veröffentlichungstag der Anmeldung: 29.09.1993
(73) Patentinhaber: SCHÜCO International KG, D-33609 Bielefeld (DE)
(72) Erfinder: Nolte, Frank, W-4500 Osnabrück (DE); Diekmann, Bernd, W-4802 Halle/Westfalen (DE)
(74) Vertreter: Stracke, Alexander, Dipl.-Ing.

(56) Entgegenhaltungen:
- EP-A- 0 203 352
- EP-A- 0 242 276
- DE-U- 9 109 252
- FR-A- 2 568 861
- FR-A- 2 639 039
- US-A- 4 930 623

## Beschreibung

Die Erfindung bezieht sich auf einen Förderer zum Transportieren von Werkstückträgern mit zwei endlosen, gleichsinnig bewegbaren, mit seitlichem Abstand zueinander angeordneten, im Umlenkbereich Räder oder Scheiben umlaufenden Fördermitteln, die als Ketten, Riemen od.dgl. ausgebildet sind, und einem Gestell aus Profilschienen, an denen zur Führung der Arbeitstrume und der Leertrume der Endlosfördermittel Führungsleisten aus Kunststoff befestigt sind.

Es sind Förderer dieser Art bekannt, die zwischen Stationen zur maschinellen Bearbeitung von Werkstücken oder zwischen Handarbeitsplätzen vorgesehen sind. Die Werkstückträger stützen sich auf die Arbeitstrume der endlosen Fördermittel des Förderers ab, die gemeinsam angetrieben werden, so daß die Werkstückträger und das darauf angeordnete Werkstück durch den Reibungsschluß mit den Arbeitstrumen mitgenommen werden. In der jeweiligen Bearbeitungs- bzw. Handlingstation wird der Werkstückträger durch Anschläge auf dem Transportsystem gestoppt und kann angehoben und fixiert werden. Nach der Bearbeitung wird der Werkstückträger zusammen mit dem Werkstück wieder auf den Förderer gesetzt und zur nächsten Station transportiert.

Im allgemeinen sind die Transportstrecken geradlinig ausgeführt, wobei auch Querförderer gleicher Bauart vorgesehen werden können. Zur Übergabe eines Werkstückträgers an einen Querförderer wird der Werkstückträger in gestoppter Position angehoben und dem Querförderer zugeführt.

Es ist bekannt, als endlose Fördermittel eines Förderers der eingangs genannten Art Gelenkketten zu verwenden und das Gestell des Förderers aus Aluminium-Strangpreßprofilen aufzubauen. Sowohl das Arbeitstrum als auch das Leertrum einer jeden Gelenkkette gleitet in Kunststofführungsprofilen, die durch Rastmittel in der zugeordneten, ein Gestellteil bildenden Profilschiene fesgelegt sind. Die Kunststofführungsprofile für die Arbeitstrume der endlos geführten Gelenkketten weisen vom Gestell nach oben sich erstreckende Führungsleisten auf, die den parallel zur Förderrichtung verlaufenden Seitenflächen der Werkstückträger zugeordnet sind. Die Führung der Werkstückträger zwischen den genanten Führungsleisten sind störanfällig und bieten die Gefahr des Verklemmens, und zwar dadurch, daß sich Späne bzw. Kleinteile wie Schrauben o.dgl. zwischen den Führungsleisten und dem Werkstückträger festsetzen. Die bekannten Werkstückträger weisen Anfasungen auf, die die Klemmwirkung noch unterstützen. Die Werkstückträger können auch innerhalb der seitlichen Führung verkanten und eine zusätzliche Reibung verursachen, die zu Störungen innerhalb des Transportsystems führen kann.

Bei dem bekannten Förderer wird das Gestell aus stranggepreßten Spezialprofilen hergestellt, durch die zwischen dem Arbeitstrum und dem Leertrum des endlosen Fördermittels nur ein geringer Abstand vorgegeben ist.

Durch die Nuten der Kettenglieder wird eine enge Seitenführung der Kette geschaffen, insbesondere ist das Kettenschloß zum Verbinden der Endteile beim Einlauf in diese Führung gefährdet und kann zu Störungen beitragen.

Es ist ferner ein Förderer zum Transportieren von Werkstückträgern bekannt (FR-A-2 639 039), bei dem die Werkstückträger als Flachpalette ausgebildet sind. Als umlaufendes Fördermittel ist eine Doppelrollenkette vorgesehen, deren Rollen sich auf Führungsschienen abstützen. Die seitlichen Kettenglieder übergreifen die Führungsschienen jeweils seitlich und bilden dadurch eine Querführung für die Kette. Zwischen den beiden Rollenketten sind Laufrollen angeordnet, auf denen sich die Flachpalette abstützt. Die Seitenführung der Flachpalette erfolgt mittels einer weiteren Rolle, so daß der Führungsaufwand erheblich ist.

Die Flachpalette ist nicht quadratisch ausgebildet. Kurz vor der Umlenkrolle wird die Flachpalette mittels einer Hubvorrichtung abgehoben und um 90° gedreht. Sie ist so dimensioniert, daß sie zwischen den beiden Förderketten des Arbeitstrums abgesenkt und oberhalb des Leertrums wieder in die Ausgangslage um 90° geschwenkt werden kann.

Der Erfindung liegt die Aufgabe zugrunde, einen Förderer der eingangs genannten Art so auszubilden, daß eine den parallel zur Förderrichtung sich erstreckenden Seitenflächen der Werkstückträger zugeordnete, am Untergestell des Förderers festgelegte Seitenführung entfällt und die Führung der Werkstückträger störungsfrei und toleranzausgleichend vorgenommen werden kann.

Diese Aufgabe wird erfindungsgemäß dadurch gelöst, daß die Werkstückträger als Rahmen ausgebildet sind, die Rahmenholme an der Unterseite eine sich über die gesamte Holmlänge erstreckende Nut zur Festlegung von Führungsleisten ausfweisen und die Führungsleisten des Gestells sowie die Rahmenführungsleisten der Werkstückträger das Arbeitstrum des Fördermittels jeweils in einer Nut etwa bis zur halben Bauhöhe aufnehmen.

Bei einer vorteilhaften Ausführungsform sind in sämtlichen Nuten der den Rahmen bildenden Profilschienen Führungsleisten unter Freilassung der Eckbereiche befestigt. Hierdurch besteht die Möglichkeit, den Werkstückträger nicht nur für eine Längsförderung sondern auch für eine Querförderung einzusetzen.

Die Ausbildung des Werkstückträgers als Rahmen bietet auch die Möglichkeit, die Werkstücke für die Bearbeitung festzuspannen.

Für die Fertigung der Rahmenholme können stranggepreßte Profilschienen aus Aluminium verwendet werden, die mindestens an der Unterseite eine sich über die gesamte Schienenlänge erstreckende Nut aufweisen.

Es ist vorteilhaft, die Nut der Führungsleiste des Werkstückträgers und des Gestells zur teilweisen Aufnahme des Arbeitstrums des Fördermittels mit einem trapezförmigen Querschnitt zu versehen, wobei die Nutbreite sich von der Öffnung zur Bodenfläche hin verkleinert.

Weitere Ausgestaltungen der Erfindung sind Gegenstand der Unteransprüche.

Ausführungsbeispiele des erfindungsgemäßen Förderers sind in den Zeichnungen dargestellt und werden im folgenden beschrieben.

Es zeigen:
- Figur 1: in schematischer Darstellung ein Transportsystem, das sich aus einem Förderer für den Vertikaltransport und aus Förderern für den Längs- und den Quertransport zusammensetzt,
- Figur 2: einen Vertikalschnitt durch einen Holm eines Werkstückträgers und durch ein Gestellteil mit zugeordneter endlos geführter Gelenkkette,
- Figur 3: eine Unteransicht eines als Rahmen ausgebildeten Werkstückträgers und
- Figur 4: eine weitere Ausführungsform eines Holms des Werkstückträgers im Schnitt.

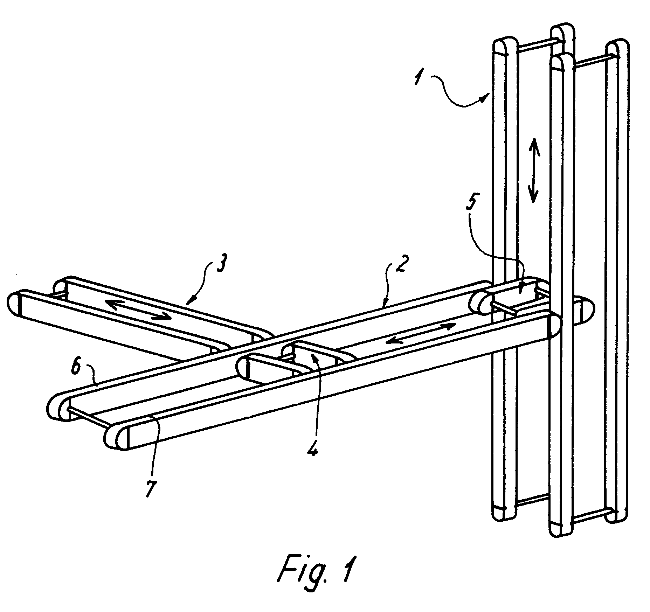

Die Fig. 1 zeigt ein Transportsystem, das sich aus einem Förderer 1 für den Vertikaltransport, einem Förderer 2 für den Längstransport und einem Förderer 3 für den Quertransport zusammensetzt. Ferner sind an den Übergabestellen Übergabeförderer 4 und 5 vorgesehen.

Sämtliche Förderer weisen zwei endlose, gleichsinnig bewegbare, mit seitlichem Abstand zueinander angeordnete Fördermittel auf, denen beim Förderer 2 die Bezugszeichen 6 und 7 zugeordnet sind. Diese Fördermittel umlaufen im Umlenkbereich Räder oder Scheiben und können als Ketten oder Riemen ausgebildet sein.

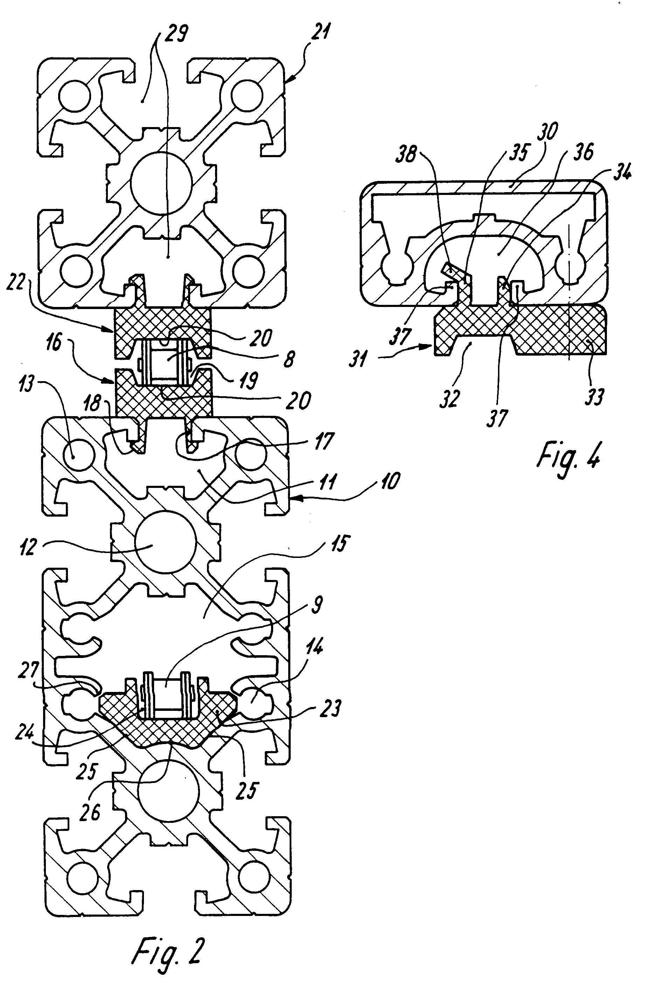

Bei dem Ausführungsbeispiel nach der Fig. 2 sind als Fördermittel endlos geführte Gelenkketten vorgesehen, die im Umlenkbereich um Kettenräder geführt und von einem Motor angetrieben werden.

Jede Endloskette weist ein Arbeitstrum 8 und ein Leertrum 9 auf. Die eine Seite des Gestells des Förderers, die in der Fig. 2 aufgezeigt ist, wird durch eine handelsübliche, stranggepreßte Profilschiene 10 gebildet, die in dem dargestellten Ausführungsbeispiel auf dem Umfang verteilte, über die gesamte Schienenlänge sich erstreckende Nuten 11 sowie Kanäle 12 und 13 und Schraubkanäle 14 aufweist. Ferner ist die Profilschiene 10 mit einer Hohlkammer 15 ausgerüstet.

In einer Nut 11, die dem Arbeitstrum 8 zugewandt ist, ist eine Führungsleiste 16 festgelegt, die aus Kunststoff gefertigt ist und als Befestigungsfuß zwei in Abstand angeordnete, parallel sich erstreckende, federnde Stege 17 aufweist, die am freien Ende mit nach außen vorspringenden Nasenleisten 18 versehen sind. Diese Nasenleisten 18 hintergreifen eine hinterschnitte Fläche der Nut 11.

Die Führungsleiste 16 ist mit einer Nut 19 ausgerüstet, die einen trapezförmigen Querschnitt aufweist, wobei sich die Nutbreite von der Öffnung zur Bodenfläche 20 hin verkleinert.

Aus der Fig. 2 ist zu entnehmen, daß die am Holm 21 des Werkstückträgers festgelegte Führungsleiste 22 in ihrem Aufbau und in ihren Abmaßen mit der Führungsleiste 16 übereinstimmt. Die Nut der Führungsleiste 22 ist somit ebenfalls im Querschnitt trapezförmig ausgebildet. Das Arbeitstrum 8 der Endloskette wird von den Nuten der Führungsleisten 16 und 22 jeweils bis etwa zur halben Bauhöhe aufgenommen. Die Summe der Nuttiefen der Nuten 19 der Führungsleisten 16 und 22 ist somit kleiner als die Bauhöhe der Kette.

Für das Leertrum 9, das durch eine Hohlkammer 15 der Profilschiene 10 geführt wird, ist eine Führungsleiste 23 vorgesehen, die eine Nut 24 zur Aufnahme der Kette aufweist, wobei die Nuttiefe der Bauhöhe der Kette entspricht.

Die Seitenflächen 25 und die untere Begrenzungsfläche 26 der Führungsleiste 23 sind der Bodenkontur der Hohlkammer angepaßt. Die Eckbereiche der Führungsleiste sind zwischen den Schraubnuten 14 angeordnet, wobei die hinterschnittenen Flächen 27 Rastflächen für die oberen Eckbereich der Führungsleiste 23 bilden.

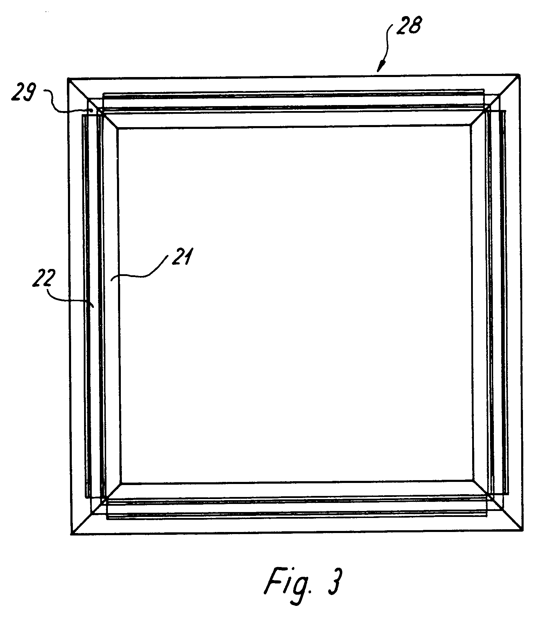

Der Werkstückträger 28 ist in dem dargestellten Ausführungsbeispiel als Rahmen ausgebildet, der in der Ausführung nach der Fig. 3 aus Rahmenholmen 21 besteht, die auf Gehrung geschnitten sind. Diese Rahmenholme weisen nach außen geöffnete Nuten 29 auf. An der dem Förderer zugewandten Seite, also an der Unterseite des Rahmens sind in den Nuten 29 die Führungsleisten 22 festgelegt.

Bei dem Ausführungsbeispiel nach der Fig. 3 sind in sämtliche Nuten 29 Führungsleisten 22 eingeschnäppt, und zwar unter Freilassung der Eckbereiche. Dies ist erforderlich, sofern man den Werkzeugträger von dem Förderer 2 auf den Querförderer 3 umsetzen will. Beim Transport des Werkstückträgers auf dem Querförderer stützen sich die die Führungsleisten 22 des anderen Holmpaares des Werkstückträgers auf den Arbeitstrumen der endlosen Fördermittel des Querförderers ab.

Der Werkstückträger als Rahmen ausgebildet kann auch aus einer Profilschiene 30 oder 21 usw. gefertigt werden, die im Querschnitt in der Fig. 4 bzw. 3 dargestellt ist. An dieser Profilschiene, nachdem sie zum Rahmenholm zugeschnitten ist, wird eine Führungsleiste 31 festgelegt, die eine im Querschnitt trapezförmige Nut 32 zur teilweisen Aufnahme des Arbeitstrums 8 und eine Platte 33 aufweist, die mit der Profilschiene 30 verschraubt wird.

Die Führungsleiste 31 ist an der Befestigungsseite mit Fixierungsstegen 34 und 35 versehen, die in eine Nut 36 eingreifen und sich an den Innenflächen der Randleisten 37 abstützen. Der Fixierungssteg 35 ist abgewinkelt und hintergreift mit dem schrägverlaufenden Teil 38 die zugeordnete Randleiste 37.

Die Platte 33 der Führungsleiste 31 ist bei der Stapelung und sonstigen Ablage von Werkstückträgern vorteilhaft.

Die Führungsleiste 31 kann auch als Führungsleiste für das Arbeitstrum am Gestell vorgesehen werden.

Die Führungsleisten 16,22 und 31 werden vorzugsweise aus einem verschleißfesten Kunststoff mit niedrigem Reibwert zum Kettenmaterial hergestellt. Als Werkstoff eignet sich vor allem Polyamid. Aus diesem Werkstoff werden die Führungsleisten mittels eines Extruders gefertigt.

Die Führungsleisten haben einfache Querchnitte, so daß sie im Falle des Verschleißes problemlos ausgetauscht werden können, ohne daß die Kette oder ein sonstiges, endlos geführtes Fördermittel demontiert zu werden braucht. Lediglich die Kettenspannung ist zu lösen, damit die Führungsleisten entfernt werden können.

Es ist vorteilhaft, daß die Kette, die das Transportmittel für den Werkstückträger bildet, gleichzeitig auch die Seitenführung für den Werkstückträger übernimmt.

Durch den Wegfall von seitlichen Führungsleisten, die mit den in Förderrichtung sich erstreckenden seitlichen Flächen des Werkstückträgers zusammenwirken, wird auch die Betriebssicherheit verbessert, da Störungsmittel, wie Schrauben oder Späne, sich an keiner Stelle festsetzen und verklemmend wirken können.

Auch die Breite der Kette weist ein ausreichendes Spiel zur Breite der Nut 19 auf, so daß ggf. vorhandene Fluchtungsfehler der Bauteile, wie Fördergestell und Werkstückträger, zueinander problemlos ausgeglichen werden.

## Patentansprüche

1. Förderer zum Transportieren von Werkstückträgern (28) mit zwei endlosen, gleichsinnig bewegbaren, mit seitlichem Abstand zueinander angeordneten, im Umlenkbereich Räder oder Scheiben umlaufenden Fördermitteln (6,7), die als Ketten, Riemen o.dgl. ausgebildet sind, und einem Gestell aus Profilschienen (10), an denen zur Führung der Arbeitstrume (8) und der Leertrume (9) der Endlosfördermittel Führungsleisten (16,23) aus Kunststoff befestigt sind, **dadurch gekennzeichnet**, **daß** die Werkstückträger (28) als Rahmen ausgebildet sind, die Rahmenholme (21) an der Unterseite eine sich über die gesamte Holmlänge erstreckende Nut (29,36) zur Festlegung von Führungsleisten (22,31) aufweisen und die Führungsleisten (16) des Gestells sowie die Rahmenführungsleisten (22,31) der Werkstückträger (22;31) das Arbeitstrum (8) des Fördermittels jeweils in einer Nut (19,32) etwa bis zur halben Bauhöhe aufnehmen.

2. Förderer nach Anspruch 1, dadurch gekennzeichnet, daß die Führungsleisten (16,22,31) des Werkstückträgers und des Gestells zur teilweisen Aufnahme des Arbeitstrums des Fördermittels einen trapezförmigen Querschnitt aufweisen und die Breite der Nut in den Führungsleisten sich von der Öffnung zur Bodenfläche (20) hin verkleinert.

3. Förderer nach Anspruch 1 oder 2, dadurch gekennzeichnet, daß die Führungsleisten (16,22,31) des Werkstückträgers (28) und des Gestells zur teilweisen Aufnahme des Arbeitstrums (8) des Fördermittels in ihrem Querschnitt übereinstimmen.

4. Förderer nach Anspruch 3, dadurch gekennzeichnet, daß die Führungsleisten (16,22) als Befestigungsfuß zwei in Abstand angeordnete, parallel sich erstreckende, federnde Stege (17) aufweisen, die am freien Ende mit einer nach außen vorspringenden Nasenleiste (18) versehen sind.

5. Förderer nach Anspruch 1 oder 2, dadurch gekennzeichnet, daß die Führungsleisten (31) an einer Seite der Nut (32) zur Aufnahme eines Teils des Arbeitstrums des endlosen Fördermittels eine mit der Profilschiene des Gestells bzw. mit dem Werkstückträger verschraubbare Platte (33) aufweisen.

6. Förderer nach Anspruch 5, dadurch gekennzeichnet, daß die Führungsleisten (31) an der Befestigungsseite mit Fixierungsstegen (34,35) versehen sind, die in die Nut (36) der zugeordneten Profilschiene eingreifen.

7. Förderer nach Anspruch 1, dadurch gekennzeichnet, daß das Leertrum des endlosen Fördermittels, das durch eine Hohlkammer (15) einer Profilschiene (10) geführt wird, die Aufnahmenut (24) einer Führungsleiste (23) durchläuft, deren Nuttiefe der Bauhöhe des Fördermittels entspricht.

8. Förderer nach Anspruch 7, dadurch gekennzeichnet, daß die Seitenflächen (25) und die untere Begrenzungsfläche (26) der Führungsleiste (23) der Bodenkontur der Hohlkammer (15) angepaßt sind und die Führungsleiste in den Eckbereichen zwischen den Seitenflächen und der oberen Begrenzungsfläche in Rastausnehmungen der Profilschiene (10) eingefedert ist.

9. Förderer nach Anspruch 1, dadurch gekennzeichnet, daß in sämtlichen Nuten (29) der den Rahmen bildenden Profilschienen Führungsleisten (22) unter Freilassung der Eckbereiche befestigt sind.

## Claims

1. A conveyor for transporting workpiece carriers (28) having two endless conveyor means (6, 7) which are movable in the same direction and which are arranged at a lateral spacing relative to each other and which pass in the direction-changing region around wheels or pulleys and which are in the form of chains, belts or the like, and a frame structure comprising shaped rails (10) to which guide bars (16, 23) of plastics material are fixed for guiding the working runs (8) and the empty runs (9) of the endless conveyor means, characterised in that the workpiece carriers (28) are in the form of frames, the frame members (21) have at the underside a groove (29, 36) extending over the entire frame member length for securing guide bars (22, 31), and the guide bars (16) of the frame structure and the frame guide bars (22, 31) of the workpiece carriers (28) respectively accommodate the working run (8) of the conveyor means in a groove (19, 32) approximately as far as half the structural height.

2. A conveyor according to claim 1 characterised in that the guide bars (16, 22, 31) of the workpiece carrier and of the frame structure, for partially receiving the working run of the conveyor means, are of a trapezoidal cross-section and the width of the groove in the guide bars decreases from the opening towards the bottom surface (20).

3. A conveyor according to claim 1 or claim 2 characterised in that the guide bars (16, 22, 31) of the workpiece carrier (28) and of the frame structure, for partially receiving the working run (8) of the conveyor means, are the same in respect of their cross-section.

4. A conveyor according to claim 3 characterised in that the guide bars (6, 22) as a fixing base have two spaced-apart resilient limbs (17) which extend parallel to each other and which are provided at the free end with an outwardly projecting nose bar (18).

5. A conveyor according to claim 1 or claim 2 characterised in that at one side of the groove (32) for receiving a part of the working run of the endless conveyor means the guide bars (31) have a plate (33) which can be screwed to the shaped rail of the frame structure or to the workpiece carrier.

6. A conveyor according to claim 5 characterised in that at the fixing side the guide bars (31) are provided with fixing legs (34, 35) which engage into the groove (36) of the associated shaped rail.

7. A conveyor according to claim 1 characterised in that the empty run of the endless conveyor means which is guided through a hollow chamber (15) of a shaped rail (10) passes through the receiving groove (24) of a guide bar (23), the depth of the groove in which corresponds to the structural height of the conveyor means.

8. A conveyor according to claim 7 characterised in that the side surfaces (25) and the lower boundary surface (26) of the guide bar (23) are matched to the bottom contour of the hollow chamber (15) and the guide bar is resiliently engaged in the corner regions between the side surfaces and the upper boundary surface in retaining recesses of the shaped rail (10).

9. A conveyor according to claim 1 characterised in that guide bars (22) are fixed in all grooves (29) of the shaped rails forming the frame, leaving the corner regions free.

## Revendications

1. Convoyeur destiné au transport de supports de pièces (28), comprenant deux moyens de transport sans fin (6, 7), mobiles dans le même sens, placés à distance latéralement l'un de l'autre, contournant des roues ou poulies au niveau de la zone de renvoi, et qui sont conformés en chaînes, courroies, ou similaires, et un châssis en rails profilés (10), sur lesquels sont fixées des barres de guidage (16, 23) en matière synthétique pour le guidage des brins tendus (8) et des brins mous (9) des moyens de transport sans fin, caractérisé en ce que les supports de pièces (28) sont conformés en cadres, les longerons de cadre (21) présentent sur le dessous une rainure (29, 36) s'étendant sur toute la longueur des longerons et destinée à la fixation de barres de guidage (22, 31), et les barres de guidage (16) du châssis ainsi que les barres de guidage (22, 31) des cadres des supports de pièces ne reçoivent chacune le brin tendu (8) du moyen de transport, dans une rainure (19, 32), que jusqu'à environ la moitié de la hauteur.

2. Convoyeur selon la revendication 1, caractérisé en ce que les barres de guidage (16, 22, 31) du support de pièce et du châssis présentent une section transversale trapézoïdale pour recevoir partiellement le brin tendu du moyen de convoyage, et la largeur de la rainure dans les barres de guidage se réduit de l'ouverture en direction de la surface (20) formant le fond.

3. Convoyeur selon la revendication 1 ou 2, caractérisé en ce que les barres de guidage (16, 22, 31) du support de pièce (28) et du châssis coïncident au niveau de leur section transversale pour recevoir partiellement le brin tendu du moyen de convoyage.

4. Convoyeur selon la revendication 3, caractérisé en ce que les barres de guidage (16, 22) présentent, en tant que pied de fixation, deux barrettes élastiques (17) espacées et parallèles, qui sont munies à leur extrémité libre d'un nez (18) formant saillie vers l'extérieur.

5. Convoyeur selon la revendication 1 ou 2, caractérisé en ce que les barres de guidage (31) présentent, d'un côté de la rainure (32), pour recevoir une partie du brin tendu du moyen de transport sans fin, une plaque (33) pouvant être vissée avec le rail profilé du châssis, respectivement avec le support de pièce.

6. Convoyeur selon la revendication 5, caractérisé en ce que les barres de guidage (31) sont munies du côté fixation de barrettes de fixation (34, 35) qui s'engagent dans la rainure (36) du rail profilé associé.

7. Convoyeur selon la revendication 1, caractérisé en ce que le brin mou du moyen de transport sans fin, qui est guidé à travers un volume creux (15) d'un rail profilé (10), traverse la rainure de réception (24) d'une barre de guidage (23), dont la profondeur de rainure correspond à la hauteur du moyen de transport.

8. Convoyeur selon la revendication 7, caractérisé en ce que les surfaces latérales (25) et la surface limite inférieure (26) de la barre de guidage (23) sont adaptées aux contours du volume creux (15) et la barre de guidage est montée élastiquement, dans les angles situés entre les surfaces latérales et la surface limite supérieure, dans des évidements d'encliquetage du rail profilé (10).

9. Convoyeur selon la revendication 1, caractérisé en ce que des barres de guidage (22) sont fixées dans toutes les rainures (29) des rails profilés formant le cadre, en laissant libre les angles.
